# EUROPÄISCHE PATENTANMELDUNG

(11) **EP 4 764 288 A1**
(43) Veröffentlichungstag der Anmeldung: **24.06.2026**
(21) Anmeldenummer: 25205446.5
(22) Anmeldetag: 29.09.2025
(51) Int. Cl.: F16L 37/56, F16L 37/252

(54) **VERBINDUNG FÜR WASSERFÜHRENDE BAUTEILE**

(30) Priorität: 19.12.2024 DE 202024107441 U
(71) Anmelder: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(57) **Zusammenfassung**

Eine Verbindungsanordnung für wasserführende Bauteile (10, 12) enthaltend ein erstes wasserführendes Bauteil (12); ein zweites wasserführendes Bauteil (10), welches mit dem ersten Bauteil (12) mittels Drehverschluss verbindbar ist, und einen Rastmechanismus (56, 62), welcher bei Erreichen einer Endstellung des Drehverschlusses einrastet; dadurch gekennzeichnet, dass das erste und das zweite wasserführende Bauteil (10, 12) im Verbindungsbereich zusammenwirkende, außermittige Kanäle (18, 20, 22, 24) für entgegengesetzte Strömungsrichtungen aufweisen, ein Verbindungselement (26) entlang der Verbindungsachse an einem der wasserführenden Bauteile (10) vorgesehen ist, und das Verbindungselement (26) in eine Aufnahme (24) an dem anderen wasserführenden Bauteil (12) einführbar und in eingeführter Stellung um die Verbindungsachse drehbar ist, bis es in einer Endstellung einrastet.

## Beschreibung

### Technisches Gebiet

Die Erfindung betrifft eine Verbindungsanordnung für wasserführende Bauteile enthaltend:
(a) ein erstes wasserführendes Bauteil;
(b) ein zweites wasserführendes Bauteil, welches mit dem ersten Bauteil mittels Drehverschluss verbindbar ist, und
(c) einen Rastmechanismus, welcher bei Erreichen einer Endstellung des Drehverschlusses einrastet.

Wasserführende Bauteile sind beispielsweise Rohrleitungen, Anschlussarmaturen, Trinkwasser- und Heizungsarmaturen. Eine Trinkwasser- oder Heizungsarmatur mit einem rohrförmigen Einlassanschluss und einem koaxialen, rohrförmigen Auslassanschluss, kann beispielsweise direkt in einer Rohrleitung installiert werden. Dazu muss die Wasserversorgung unterbrochen und die Rohrleitung aufgebrochen werden. Zum Austauschen der Armatur muss die Rohrleitung erneut aufgebrochen werden. Wenn mehrere Armaturen hintereinandergeschaltet werden, um verschiedene Funktionalitäten zu verwirklichen, beispielsweise Absperrung, Druckminderer, Filter und Wasserbehandlung, nehmen die Armaturen erhebliche Baulängen ein.

Der Austausch, die Ergänzung, die Änderung und die Wartung von Armaturen kann erheblich erleichtert werden, wenn die Armatur an einer Anschlussarmatur angeschlossen wird. Die Anschlussarmatur wird mit rohrförmigem Einlass und Auslass in der Rohrleitung installiert und hat einen Anschluss, an dem der Einlass und Auslass weiterer Armaturen lösbar befestigt werden können. Derartige Anschlüsse erlauben Veränderungen an der angeschlossenen Armatur ohne, dass die Rohrleitung erneut aufgebrochen werden muss. Besonders bewährt haben sich Flanschanschlüsse.

### Stand der Technik

Beispielsweise aus EP 3 095 500 B1 ist eine Anschlussarmatur mit einem planen Flanschanschluss bekannt. Wasser fließt vom Einlass in einen Zentralkanal. Vom Zentralkanal wird das Wasser durch die angeschlossene Armatur geleitet. Das Wasser fließt durch einen um den Zentralkanal herum angeordneten Ringkanal zurück in die Anschlussarmatur und von dort zum Auslass. Die Flanschverbindung wird auf beiden Seiten von einer ebenen Fläche gebildet. Zwischen den Flächen ist eine flächige Axialdichtung angeordnet. Die Flächen müssen zusammengedrückt werden und werden dann miteinander verschraubt. Hierfür ist ein Werkzeug erforderlich. Besonders vorteilhaft sind derartige Flanschverbindungen, weil sie verschiedene Einbaulagen der angeschlossenen Armaturen erlauben. Gelegentlich ist die Einbausituation beengt. Dann ist es schwierig mit dem Werkzeug an der Armatur anzugreifen.

DE 195 29 189 C1 offenbart eine Flanschverbindung, bei der Schrauben mit Schraubenköpfen an der angeschlossenen Armatur durch Öffnungen gesteckt werden, die einen Öffnungsbereich mit größerem Durchmesser und einen Öffnungsbereich mit geringerem Durchmesser aufweisen. Die Schrauben werden durch die Öffnungsbereiche mit größerem Durchmesser gesteckt. Anschließend werden die Bauteile gegeneinander verdreht, so dass die Schrauben sich durch die Öffnungsbereiche mit geringerem Durchmesser erstrecken. Da die Schraubenköpfe größer sind, als der Durchmesser der darunterliegenden Öffnungsbereiche, kann die Armatur in dieser Endstellung nicht mehr abgezogen werden. Auch bei dieser Verbindung wird eine Axialdichtung verwendet.

EP 4 462 003 A1 offenbart eine Flanschverbindung für wasserführende Bauteile mit einem Drehverschluss, welcher einen Rastmechanismus aufweist, der bei Erreichen einer Endstellung einrastet. Die wasserführenden Bauteile haben jeweils einen auf der Verbindungsachse liegenden Zentralkanal und einen darum herum angeordneten Ringkanal. Das Wasser fließt durch einen der Kanäle in eine erste Richtung und durch den anderen Kanal in entgegengesetzter Richtung. Die Verbindungen der Kanäle erfolgen mittels Radialdichtungen. Bei der bekannten Anordnung werden vier Verbindungsstifte an der einen Armatur in zugehörige Öffnungen an der anderen Armatur eingefädelt. Die Verbindungsstifte sind in Umfangsrichtung verteilt. Je nach Einbausituation ist das schwierig und erfordert viel Material. Jeder der Verbindungsstifte mit den zugehörigen Öffnungen nimmt einen Winkelbereich ein. Die Verbindungsquerschnitte lassen sich daher nicht beliebig verringern. Die bekannte Verbindungsanordung ist für kleine Armaturen und kleine Querschnitte zu aufwändig und zu teuer.

### Offenbarung der Erfindung

Es ist Aufgabe der Erfindung, eine Anordnung der eingangs genannten Art zu schaffen, die leichter zu handhaben ist und kleinere Abmessungen ermöglicht. Erfindungsgemäß wird die Aufgabe bei einer Anordnung der eingangs genannten Art dadurch gelöst, dass
(d) das erste und das zweite wasserführende Bauteil im Verbindungsbereich zusammenwirkende, außermittige Kanäle für entgegengesetzte Strömungsrichtungen aufweisen,
(e) ein Verbindungselement entlang der Verbindungsanchse an einem der wasserführenden Bauteile vorgesehen ist, und
(f) das Verbindungselement in eine Aufnahme an dem anderen wasserführenden Bauteil einführbar und in eingeführter Stellung um die Verbindungsachse drehbar ist, bis es in einer Endstellung einrastet.

Die außermittigen Kanäle können insbesondere von zwei konzentrischen Rinkanälen gebildet sein. Anders als bei bekannten Anordnungen sind hier zwei außermittige Kanäle, beispielsweise Ringkanäle vorgesehen. Dies ermöglicht ein Verbindungselement im zentralen Bereich auf der Verbindungsachse. Verbindungsstifte im Umfangsbereich an einem Flansch sind nicht erforderlich. Auf diese Weise kann eine Verbindung mit einer Radialdichtung auch bei kleinen Querschnitten verwirklicht werden. Anders als bei bekannten Flanschverbindungen mit beispielsweise vier Verbindungsstiften entlang des Umfangs wird nur ein Verbindungselement verwendet. Entsprechend ist die Verbindungsanordnung einfacher aufgebaut, erfordert weniger Material und ist leichter zu installieren.

Vorteilhafterweise ist vorgesehen, dass das Verbindungselement an seinem freien Ende abgerundet ist. Ein solches Verbindungselement kann beispielsweise ein Bolzen, Stift oder Vorsprung sein, der in eine passende Aufnahme eingeführt wird. Ein abgerundetes freies Ende erleichtert das Einführen und verhindert, dass das Verbindungselement auf dem Weg zur Endstellung verkantet.

Bei einer bevorzugten Ausgestaltung der Erfindung weist das Verbindungselement einen oder mehrere radiale Vorsprünge auf und die Aufnahme ist mit Aussparungen versehen, deren Lage und Größe derart an die Vorsprünge am Verbindungselement angepasst sind, dass die Vorsprünge die Aussparungen beim Zusammenstecken der wasserführenden Bauteile passieren. Das Verbindungselement arbeitet dann wie ein Schlüssel, der in ein Schlüsselloch eingeführt und anschließend gedreht wird. Die radialen Vorsprünge können durch radiale Aussparungen in einer beispielsweise zylindrischen Wandung der Aufnahme bewegt werden oder durch Aussparungen in einer lateral zur Achse angeordneten planen Wandung innerhalb der Aufnahme.

Es kann vorgesehen sein, dass die Aussparungen derart angeordnet sind, dass der Winkel, unter dem die Bauteile miteinander verbunden werden, genau festgelegt ist. Dies ist insbesondere dann sinnvoll, wenn nur eine Verbindung erreicht werden soll und die Lage der Bauteile zueinander vordefiniert sein soll. Bei vielen Anwendungen ist es aber sinnvoll, wenn die Vorsprünge und Aussparungen derart angeordnet sind, dass die wasserführenden Bauteile unter verschiedenen Winkeln miteinander verbindbar sind. Dies kann beispielsweise dadurch erreicht werden, dass eine Aussparung mehrfach, beispielsweise um Winkel von 90, 180 und 270 Grad oder 60, 120, 180 und 240 Grad versetzt vorgesehen ist. Dann kann das Bauteil mit dem Verbindungselement um die entsprechenden Winkel winkelversetzt mit dem anderen Bauteil verbunden werden.

Besonderes vorteilhaft ist es, wenn das Verbindungselement mehrere Vorsprünge mit dem gleichen Profil aufweist, so dass jeder der Vorsprünge durch jede der Aussparungen passt.

Vorzugsweise ist vorgesehen, dass die Aussparungen in einem Bereich vor einem Hohlraum angeordnet sind, in welchen die Vorsprünge beim Zusammenstecken der wasserführenden Bauteile einführbar sind und dessen Abmessungen eine Drehung des Verbindungselements bis zur Endstellung erlauben. Dabei ist eine volle Drehung um einen Winkel von 360 Grad nicht erforderlich. Es reicht eine Drehung um einen kleinen Winkel bis zu einer Endstellung, in welcher der Rastmechanismus ausgelöst wird.

Die Vorsprünge können von wenigstens einem Stift in einer radialen Bohrung in dem Verbindungselement gebildet sein, der aus der Bohrung hervorspringt. Beispielsweise kann eine Durchgangsbohrung in radialer Richtung vorgesehen sein, aus welcher der Stift beidseitig hervortritt. Es können aber auch mehrere winkelversetzte Bohrungen vorgesehen sein, in welche jeweils ein Stift eingesteckt und dort fixiert ist. Alternativ sind Vorsprünge angeschweißt oder bilden einen integralen Teil des Verbindungselements, welches in diesem Bereich einstückig ausgebildet ist.

Die Verbindung kann beispielsweise dadurch hergestellt werden, dass eines der wasserführenden Bauteile wenigstens einen in Achsrichtung vorspringenden Stutzen aufweist, welcher in wenigstens einen zugehörigen koaxialen Stutzen oder in eine Aufnahme an dem anderen wasserführenden Bauteil einführbar ist und mit einer Radialdichtung abdichtbar ist. Beispielsweise können mehrere Ringschultern an der Aufnahme vorgesehen werden, die mit unterschiedlich weit vorspringenden, koaxialen Stutzen zusammenwirken. Dabei kann jeder der Stutzen an der Ringschulter anschlagen und mit einer Radialdichtung abgedichtet sein.

Eine besonders kostengünstige Variante der Erfindung sieht vor, dass wenigstens eines der wasserführenden Bauteile ganz oder teilweise aus Kunststoff gefertigt ist. Beispielsweise kann der Stutzen an ein Kunststoffteil angeformt sein, durch welches auch die Ringkanäle geführt sind. Insbesondere bei kleineren Querschnitten herrschen geringere Drücke, so dass die Verwendung von kostengünstigem Kunststoff ermöglicht wird. Die Armatur erfordert somit deutlich weniger metallische Materialien und Metalllegierungen wie Rotguss oder Messing, hat ein geringeres Gewicht und kann kostengünstiger gefertigt werden. Das Verbindungselement kann hingegen von einem separaten Teil aus Metall oder einer Metallegierung gefertigt sein. Dadurch wird eine stabile Verbindung gewährleistet.

Der Rastmechanismus umfasst vorzugsweise ein Rastelement an einem der Bauteile, welches in axialer Richtung mit einer Federkraft beaufschlagt ist und in eine Aussparung an dem anderen Bauteil einrastet, wenn die Endstellung erreicht ist. Es versteht sich, dass auch jeder andere Rastmechanismus verwendet werden kann. Vorzugsweise ist vorgesehen, dass mehrere Aussparungen vorgesehen sind und das Rastelement in eine der Aussparungen einrastet. Auf diese Weise wird kostengünstig eine Möglichkeit geschaffen, verschiedene Endstellungen zu verwirklichen. Entsprechend können die Bauteile in unterschiedlicher Winkelposition miteinander verbunden werden. Das erleichtert die Anpassung an die Installationsumgebung.

Bei einer einfachen Ausgestaltung der Erfindung ist das Rastelement von einem Schieber an einem Bauteil gebildet ist, welcher in eine Aussparung an einem Flansch des anderen Bauteils eingreift. Die Aussparungen können sich entlang des Umfangs eines Flansches erstrecken.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen und den einschlägigen Internetseiten und Publikationen, insbesondere lexikalischer Art, beispielsweise www.Wikipedia.de, www.wissen.de oder der Wettbewerber, forschenden Institute, Universitäten und Verbände, beispielsweise DVGW oder VDI, dargelegt sind. Insbesondere haben die verwendeten Begriffe nicht die gegenteilige Bedeutung dessen, was der Fachmann den obigen Publikationen entnimmt.

### Kurze Beschreibung der Zeichnungen

- Fig.1: ist eine perspektivische Explosionsdarstellung einer Verbindungsanordnung für zwei schematisch dargestellte, wasserführende Bauteile, die noch nicht verbunden sind.
- Fig.2: zeigt die Anordnung aus Figur 1, wobei eines der Bauteile angeschnitten ist.
- Fig.3: zeigt die Anordnung aus Figur 2 aus einer anderen Perspektive.
- Fig.4: zeigt die Anordnung aus Figur 3 ohne Gehäuse.
- Fig.5: ist ein Vertikalschnitt durch einen Teil der Anordnung aus Figur 3 in verbundenem Zustand.
- Fig.6: ist ein Schnitt entlang der Schnittebene B-B in Figur 5 während des Verbindungsvorgangs vor dem Drehen und Einrasten.
- Fig.7: ist ein Schnitt entlang der Schnittebene B-B in Figur 5 nach dem Drehen und Einrasten.
- Fig.8: ist eine Detaildarstellung der Anordnung aus Figur 5 mit dem Rastmechanismus.
- Fig.9: zeigt einen Anwendungsfall für eine Verbindungsanordnung nach Figur 1.
- Fig.10: ist ein Vertikalschnitt durch die Anordnung aus Figur 9.
- Fig.11: zeigt die Anordnung aus Figur 8 aus einer anderen Perspektive.

### Beschreibung des Ausführungsbeispiels

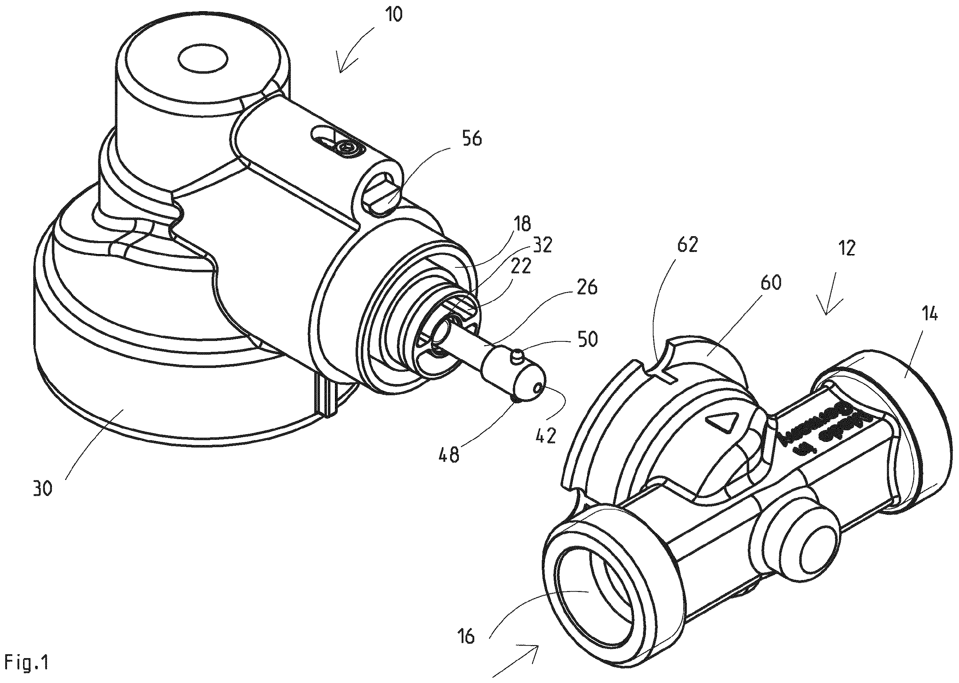

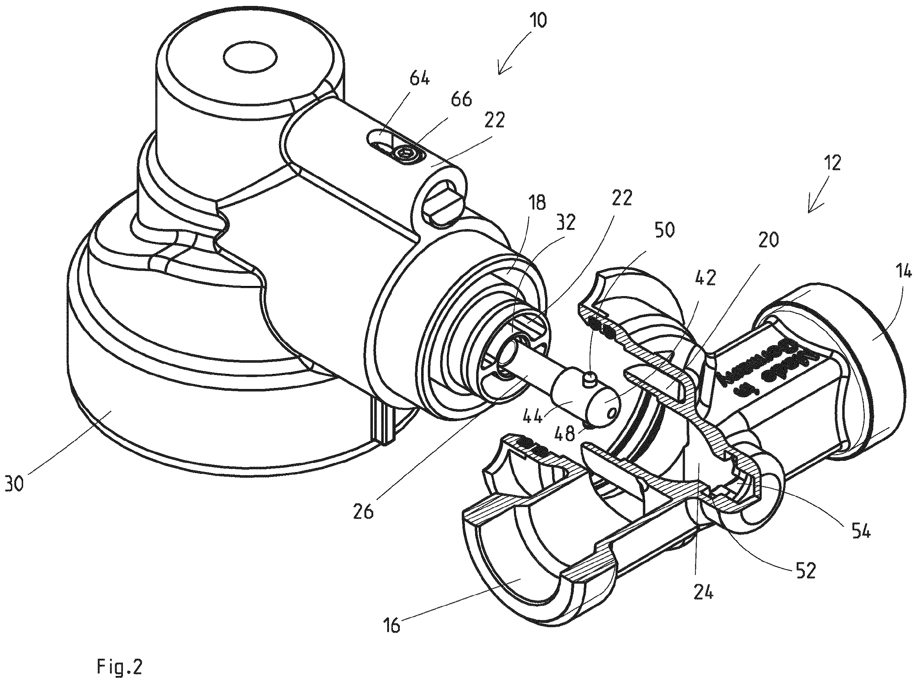

Figur 1 und 2 zeigen zwei wasserführende Bauteile 10 und 12. Eines der Bauteile dient im vorliegenden Ausführungsbeipiel beispielhaft als Anschlussarmatur 12, die mit einem Einlass 16 und einem koaxialen Auslass 14 in einer Rohrleitung installiert werden kann.

An ein solches Bauteil 12 können verschiedene wasserführende Bauteile 10 angeschlossen werden. Beispiele sind jede Art von Trink- und Heizungswasserarmaturen, beispielsweise Filter mit und ohne Rückspülung, Ionentauscher und andere Wasserbehandlungsgeräte, Dosierarmaturen, Messarmaturen, Systemtrenner, Sicherheits- und Sicherungsarmaturen.

Die Bauteile 10 und 12 können mittels der dargestellten Verbindungsanordnung miteinander verbunden werden. Es versteht sich, dass auch andere Bauteile auf diese Weise miteinander verbunden werden können und nicht zwingend eine Anschlussarmatur erforderlich ist. Jedes der Bauteile 10 und 12 weist im Verbindungsbereich einen außermittigen Kanal in Form eines äußeren Ringkanals 18, 20 auf. Das Bauteil 10 weist einen außermittigen Kanal in Form eines inneren Ringkanals 22 auf. Das Bauteil 12 weist einen Aufnahme 24 auf. In die Aufnahme 24 ragt ein nachstehend beschriebenes Verbindungselement 26.

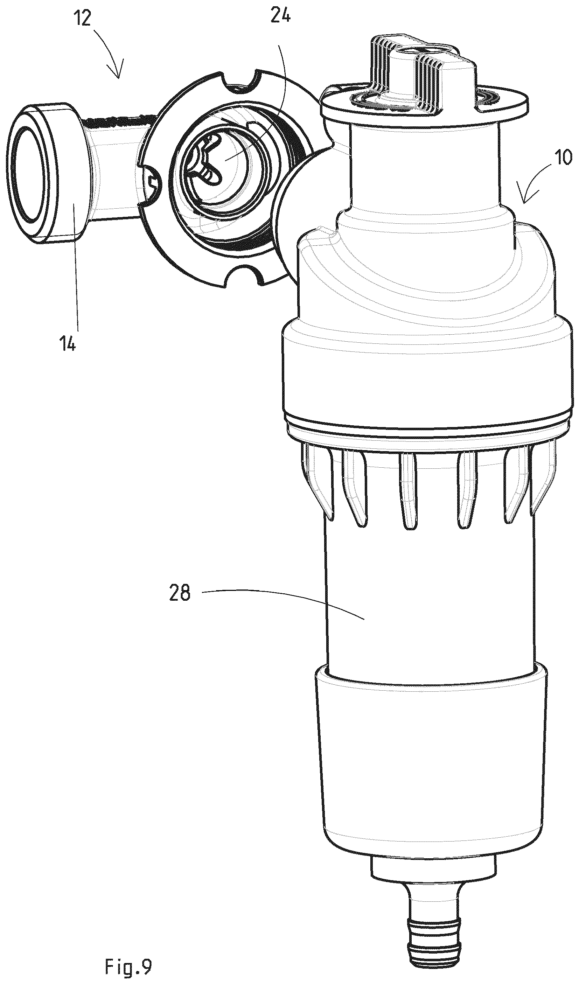

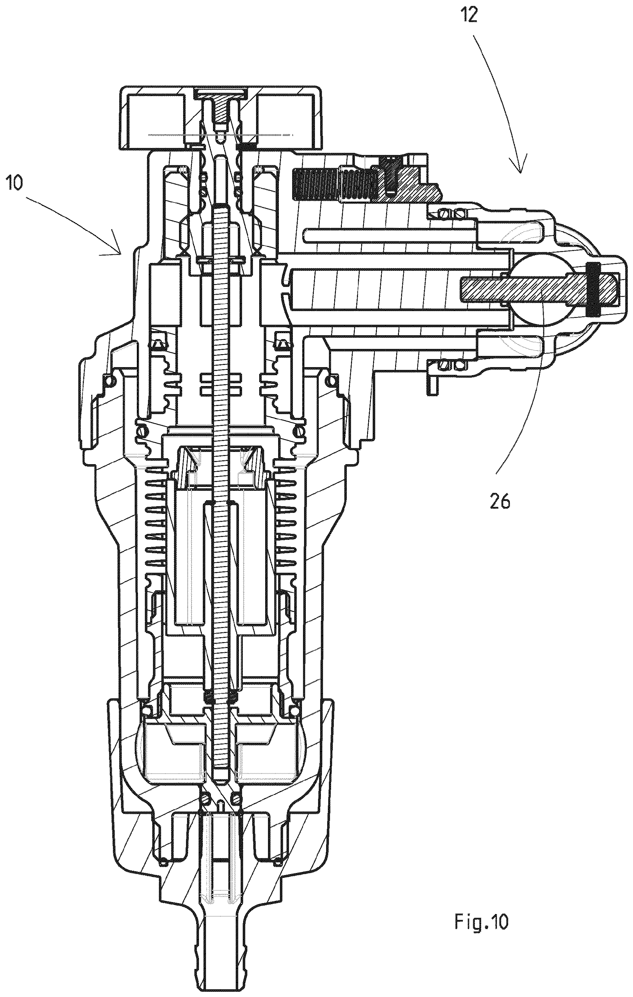

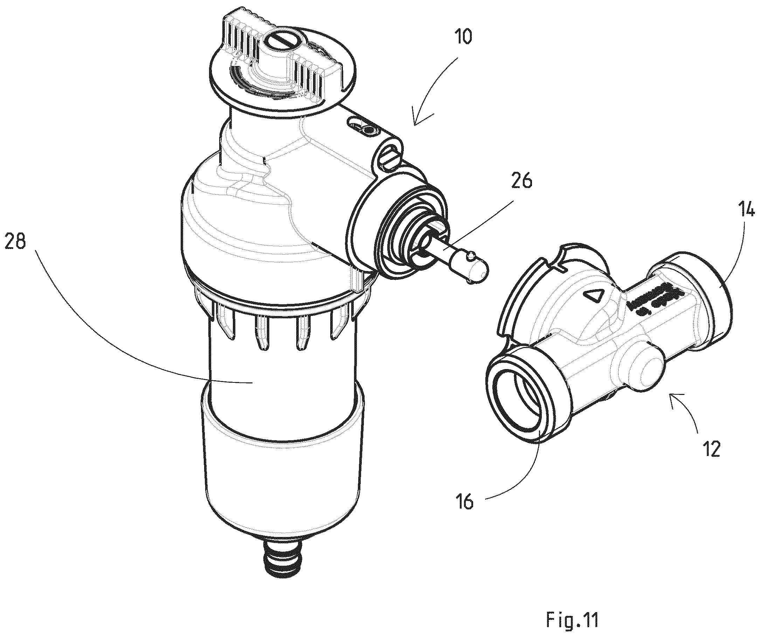

Im verbundenen Zustand ist der innere Ringkanal 22 des Bauteils 10 mit dem um das Verbindungselement 26 herum gebildeten außermittigen Kanal der Aufnahme 24 des Bauteils 12 verbunden. Der äußere Ringkanal 22 des Bauteils 10 ist mit dem äußeren Ringkanal 20 des Bauteils 12 verbunden. Auf diese Weise kann die Strömung von einem der Bauteile 10 oder 12 durch einen der außermittigen Kanäle in das jeweils andere Bauteil 10 bzw. 12 hineinfließen und durch den jeweils anderen außermittigen Kanal wieder zurück. Im vorliegenden Ausführungsbeispiel fließt das Wasser vom Einlass 16 in den äußeren Ringkanal 20 der Anschlussarmatur 12. Von dort durch den Verbindungsbereich in den äußeren Ringkanal 18 eines Bauteils 10, beispielsweise eines Rückspülfilter, wie er in den Figuren 9-11 illustriert ist. Das gefilterte Wasser fließt durch den inneren Ringkanal 22 im Bauteil 10 zurück in die Aufnahme 26 der Anschlussarmatur 12. Von dort fließt das Wasser zum Auslass 14.

An die Anschlussarmatur 12 lassen sich verschiedene wasserführende Armaturen anschließen. Im dargestellten Ausführungsbeispiel der Figuren 9 bis 11 ist dies ein Rückspülfilter, der allgemein bekannt ist und daher hier nicht näher beschrieben werden muss.

Der Rückspülfilter weist ein oberes Anschlussteil 30 auf, welches auf eine Filtertasse 28 aufgeschraubt ist. Dies ist in Figur 9 bis 11 zu erkennen. Bei derartigen Rückspülfiltern ist das obere Anschlussteil 30 immer oberhalb der Filtertasse 28 angeordnet. Die Einbaurichtung ist folglich festgelegt. Die Verbindung mit der Anschlussarmatur 12 erfolgt über einen seitlichen Anschluss. Es gibt Bauteile 10, bei denen die Einbaurichtung nicht festgelegt ist und an die örtlichen Gegebenheiten bei der Installation angepasst werden können. Das kann beispielsweise um eine Rotation um eine horizontale Achse um einen Winkel von 90, 180 oder 270 und Installation in dieser Lage erfolgen.

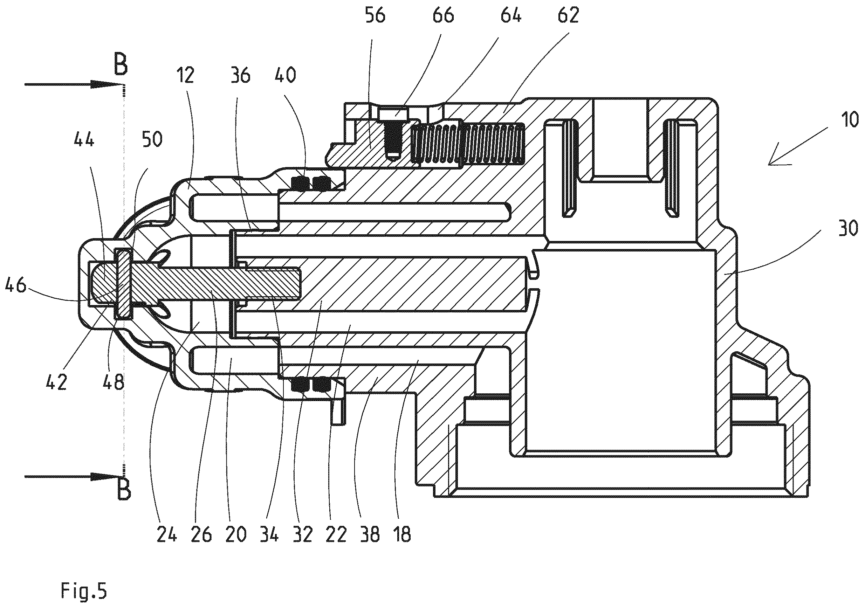

Im vorliegenden Ausführungsbeispiel ist das obere Anschlussteil 30 aus Kunststoff gefertigt. Das Anschlussteil 30 ist mit einem horizontalen, inneren Stutzen 32 mit einer seitlichen Gewindebohrung 34 versehen. Dies ist in Figur 5 zu erkennen. In die Gewindebohrung 34 ist das Verbindungselement 26 eingeschraubt. Es versteht sich, dass es auch auf andere Weise befestigt sein kann, etwa mittels einer Clipsverbindung. Der innere Ringkanal 22 erstreckt sich um den inneren Stutzen 32 herum.

Der innere Ringkanal 22 wird verbindungsseitig von einem horizontalen, äußeren, etwas weniger vorspringenden Stutzen 36 begrenzt. Um den äußeren Stutzen 36 herum erstreckt sich der äußere Ringkanal 18. Der äußere Ringkanal 18 wird verbindungsseitig nach außen von der Außenwandung 38 des oberen Anschlussteils 30 begrenzt. Zum Herstellen der Verbindung werden der innere Stutzen 32 und der äußere Stutzen 36 in zugehörige Öffnungen der Anschlussarmatur 12 eingesteckt. O-Ringe 40 bilden Radialdichtungen zwischen der Anschlussarmatur 12 und dem Anschlussteil 30. Im vorliegenden Ausführungsbeispiel sind die O-Ringe 40 in Innenringnuten im Gehäuse der Anschlussarmatur 12 angeordnet.

Das Verbindungselement 26 ist am freien Ende 42 abgerundet. Die Aufnahme 24 ist innen ebenfalls abgerundet. Das Verbindungselement 26 wird auf diese Weise sicher und ohne Aufwand in der Aufnahme 24 auf der Verbindungsachse zentriert. Die korrekte Position lässt sich auf diese Weise auch dann erreichen, wenn es beispielsweise dunkel ist und/oder der/die Installateur*in den Bereich nicht einsehen kann. Es versteht sich, dass auch andere selbstzentrierende Geometrien verwendet werden können.

Das verdickten Ende 44 des Verbindungselements 26 weist eine Bohrung auf. In der Bohrung ist ein Stift 46 fixiert. Der Stift 46 springt mit beiden Enden aus der Bohrung hervor, so dass Vorsprünge 48, 50 gebildet sind. Die Vorsprünge 48, 50 sind um einen Winkel von 180 Grad versetzt. Es versteht sich, dass auch nur ein Vorsprung oder mehr Vorsprünge vorgesehen sein können und dass die Vorsprünge andere Winkel entlang des Umfangs des Verbindungselements 26 einnehmen können. Die Vorsprünge 48, 50 sind ebenfalls abgerundet.

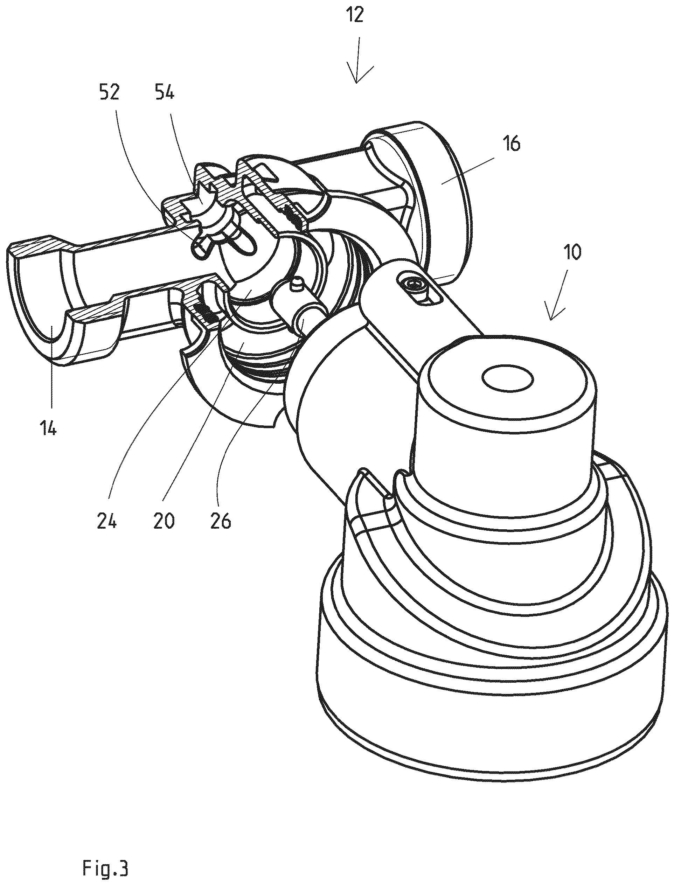

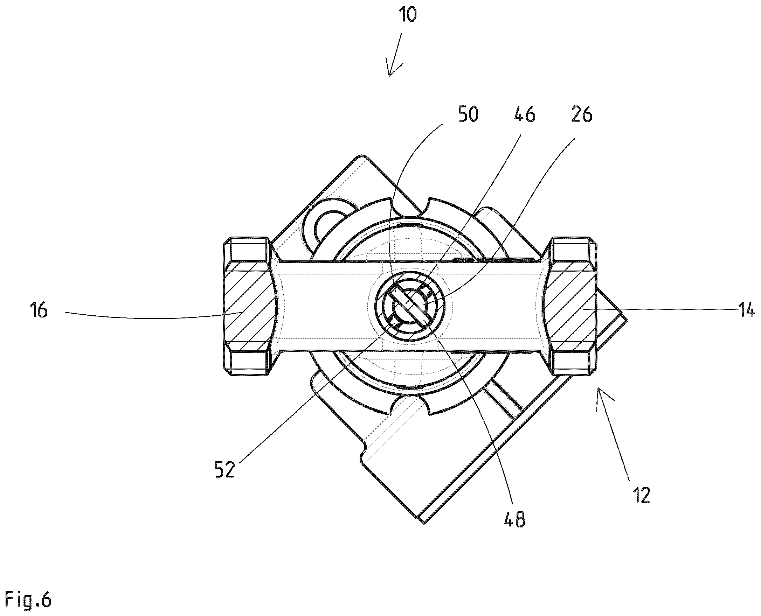

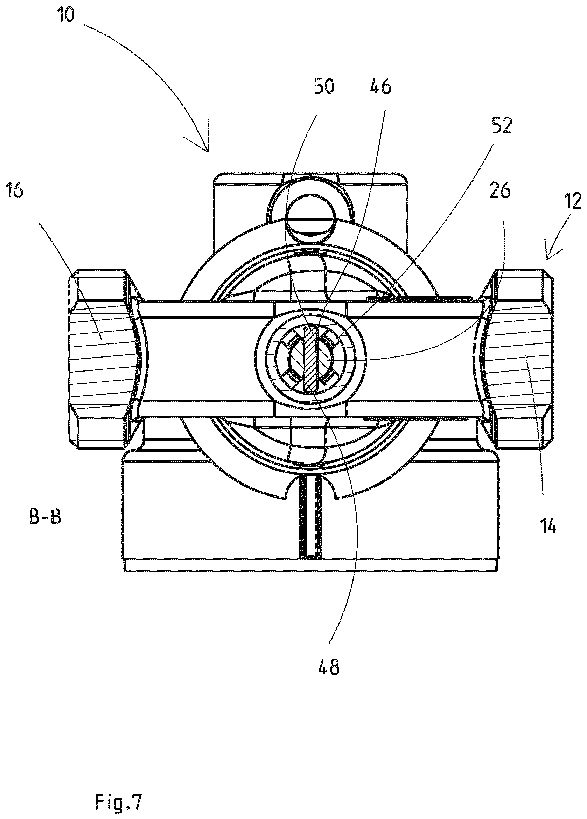

Die Aufnahme 24 weist im hinteren Achsbereich 4 kreuzförmig angeordnete, um 90 Grad winkelversetzte Aussparungen 52 auf. Diese sind in Figuren 2 bis 4 und im Schnitt B-B in den Figuren 6 und 7 zu erkennen. Bei der Herstellung der Verbindung werden die gegenüberliegenden Vorsprünge 48, 50 durch zwei gegenüberliegende Aussparungen 52 gesteckt. Dies ist in Figur 6 illustriert. Die Rundungen an den Vorsprüngen 48, 50 erleichtern das Einfädeln der Vorsprünge 48, 50 in die Aussparungen.

Hinter dem Bereich mit den Aussparungen ist ein Hohlraum angeordnet. Der Hohlraum hat wenigstens den Durchmesser der Aussparungen, so dass die Vorsprünge in diesem Bereich rotiert werden können. Im vorliegenden Ausführungsbeispiel sind die Aussparungen 52 kreuzförmig und gegenüber der Vertikalen bzw. Horizontalen um einen Winkel von jeweils 45 Grad winkelversetzt angeordnet. Das Bauteil 10 mit dem Verbindungselement 26 wird also um einen Winkel von 45 Grad gegenüber der Vertikalen versetzt eingesteckt und mit den Vorsprüngen 48, 50 soweit durch die Aussparungen 52 vorgeschoben, bis diese sich vollständig in dem dahinter liegenden Hohlraum befinden. Dann kann das Bauteil 10 um die Verbindungsachse gedreht werden. Dies ist in Figur 7 illustriert. Die Vorsprünge 48, 50 fluchten nicht mehr mit den Aussparungen 52. Das Bauteil 10 mit dem Verbindungselement 26 kann nicht mehr abgezogen werden.

Nach einer Drehung um einen Winkel von 45 Grad erreicht das Bauteil 10 die in Figur 7 gezeigte Endstellung. In dieser Endstellung wird ein Rastmechanismus aktiviert, der verhindert, dass eine weitere Verdrehung oder ein Drehung in umgekehrter Richtung vorgenommen werden kann. Der Rastmechanismus kann in vielen Varianten verwirklicht werden.

Im vorliegenden Ausführungsbeispiel wurde ein Rastelement in Form eines Schiebers 56 verwendet. Der Schieber 56 ist mit der Kraft einer Feder 58 beaufschlagt. Dies ist in Figur 5 gut zu erkennen. Die Feder 58 drückt den Schieber 56 nach außen, so dass das freie Ende des Schiebers über die Verbindungsebene hinaus nach in achsialer Richtung vorspringt. Das ist in Figur 1 zu erkennen.

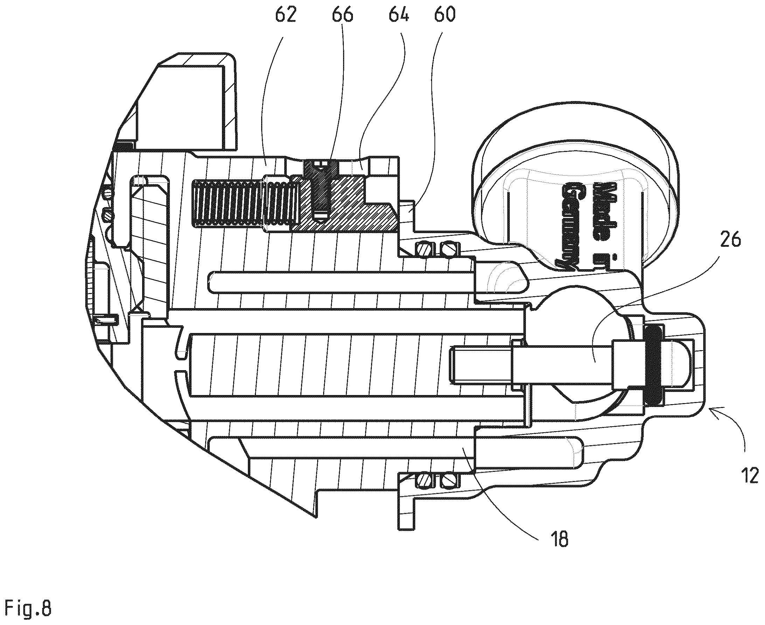

Das Bauteil 12 weist einen Flansch in Form eines in radialer Richtung vorspringenden Randes 60 auf. Der Rand 60 ist mit Aussparungen 62 versehen. Im vorliegenden Ausführungsbeispiel sind vier um einen Winkel von 90 Grad versetzte Aussparungen im Rand 60 vorgesehen. Beim Herstellen der Verbindung ist das Bauteil 12 zunächst um 45 Grad um die Verbindungsachse gedreht (Fig.6 und Fig.8). Dann trifft der Schieber 56 auf den Rand 60 und wird gegen die Federkraft der Feder 58 in achsialer Richtung zurückgedrückt. Das ist in Fig. 8 gut zu erkennen.

Bei der oben beschriebenen Drehung um 45 Grad wird der Schieber 56 in den Bereich einer der Aussparungen 62 bewegt. Dann springt er vor und wird von der Feder in die Aussparung gedrückt. Eine weitere Drehung weder in der einen, noch in der anderen Richtung wird dann vom Schieber 56 verhindert. Der Schieber 56 bildet folglich ein Rastelement, welches so einrastet, dass die Drehung und somit ein Lösen der Verbindung sicher verhindert wird.

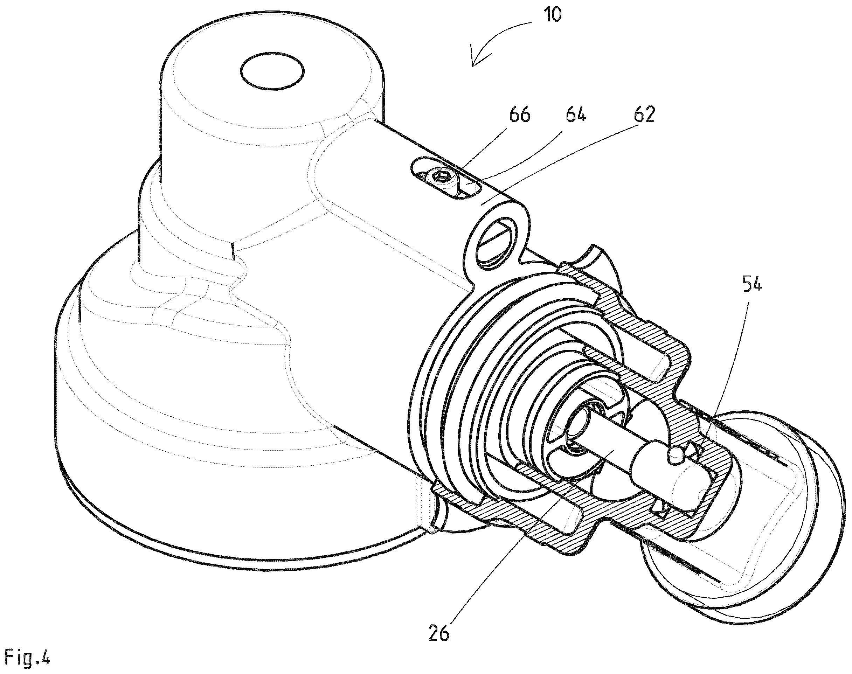

Der Schieber 56 ist in einem Gehäuse 62 geführt. Dies ist in Figur 1, 2 und 8 gut zu erkennen. Das Gehäuse 62 ist an das Bauteil 10 angeformt und weist ein nach oben ragendes Langloch 64 auf. Eine Schraube 66 erstreckt sich durch das Langloch 64 und ist in den Schieber 56 eingeschraubt. Der Schieber 56 folgt also immer der Bewegung der Schraube 66. Zum Lösen der Verbindung der Bauteile 10 und 12 kann die Schraube 66 von der in Figur 1, 2 und 5 gezeigten Stellung, welche sie in der Endstellung einnimmt, gegen die Federkraft nach hinten bewegt werden. Diese Stellung ist in Figur 4 illustriert. Dabei wird der Schieber 56 aus den Aussparungen 62 herausbewegt. Der so gelöste Rastmechanismus erlaubt die Drehung der Bauteile 10 und 12 gegeneinander, so dass die Verbindung wieder getrennt werden kann. Ein versehentliches Trennen der Verbindung wird mit dem Rastmechanismus verhindert.

Figuren 9 bis 11 zeigen ein Anwendungsbeispiel einer solchen Verbindungsanordnung. Dabei wird das Bauteil 12 von einer Anschlussarmatur gebildet und das Bauteil 10 von einem Filter mit Filterkappe 30 und Filtertasse 28. Es versteht sich aber, dass auch jede andere Armaturenverbindung mit einer solchen Verbindungsanordnung verwirklicht werden kann.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Verbindungsanordnung für wasserführende Bauteile (10, 12) enthaltend:
(a) ein erstes wasserführendes Bauteil (12);
(b) ein zweites wasserführendes Bauteil (10), welches mit dem ersten Bauteil (12) mittels Drehverschluss verbindbar ist, und
(c) einen Rastmechanismus (56, 62), welcher bei Erreichen einer Endstellung des Drehverschlusses einrastet;
**dadurch gekennzeichnet, dass**
(d) das erste und das zweite wasserführende Bauteil (10, 12) im Verbindungsbereich zusammenwirkende, außermittige Kanäle (18, 20, 22, 24) für entgegengesetzte Strömungsrichtungen aufweisen,
(e) ein Verbindungselement (26) entlang der Verbindungsachse an einem der wasserführenden Bauteile (10) vorgesehen ist, und
(f) das Verbindungselement (26) in eine Aufnahme (24) an dem anderen wasserführenden Bauteil (12) einführbar und in eingeführter Stellung um die Verbindungsachse drehbar ist, bis es in einer Endstellung einrastet.

2. Verbindungsanordnung nach Anspruch 1, **dadurch gekennzeichnet, dass** die außermittigen Kanäle von zwei konzentrischen Ringkanälen gebildet sind.

3. Verbindungsanordnung nach Anspruch 1 oder 2, **dadurch gekennzeichnet, dass** das Verbindungselement (26) an seinem freien Ende (42) abgerundet ist.

4. Verbindungsanordnung nach einem der vorgehenden Ansprüche, **dadurch gekennzeichnet, dass** das Verbindungselement (26) einen oder mehrere radiale Vorsprünge (48, 50) aufweist, und die Aufnahme (24) mit Aussparungen (52) versehen ist, deren Lage und Größe derart an die Vorsprünge (48, 50) am Verbindungselement (26) angepasst sind, dass die Vorsprünge (48, 50) die Aussparungen (52) beim Zusammenstecken der wasserführenden Bauteile (10, 12) passieren.

5. Verbindungsanordnung nach Anspruch 4, **dadurch gekennzeichnet, dass** die Vorsprünge (48, 50) und Aussparungen (52) derart angeordnet sind, dass die wasserführenden Bauteile (10, 12) unter verschiedenen Winkeln miteinander verbindbar sind.

6. Verbindungsanordnung nach Anspruch 4 oder 5, **dadurch gekennzeichnet, dass** die Aussparungen (52) in einem Bereich vor einem Hohlraum (54) angeordnet sind, in welchen die Vorsprünge beim Zusammenstecken der wasserführenden Bauteile (10, 12) einführbar sind und dessen Abmessungen eine Drehung des Verbindungselements (26) bis zur Endstellung erlauben.

7. Verbindungsanordnung nach einem der vorgehenden Ansprüche 3 bis 6, **dadurch gekennzeichnet, dass** die Vorsprünge (48, 50) von wenigstens einem Stift (46) in einer radialen Bohrung in dem Verbindungselement (26) gebildet sind, der aus der Bohrung hervorspringt.

8. Verbindungsanordnung nach einem der vorgehenden Ansprüche, **dadurch gekennzeichnet, dass** eines der wasserführenden Bauteile (10) wenigstens einen in Achsrichtung vorspringenden Stutzen (36, 38) aufweist, welcher in wenigstens einen zugehörigen koaxialen Stutzen oder in eine Aufnahme an dem anderen wasserführenden Bauteil (12) einführbar ist und mit einer Radialdichtung abdichtbar ist.

9. Verbindungsanordnung nach einem der vorgehenden Ansprüche, **dadurch gekennzeichnet, dass** wenigstens eines der wasserführenden Bauteile (12) ganz oder teilweise aus Kunststoff gefertigt ist.

10. Verbindungsanordnung nach einem der vorgehenden Ansprüche, **dadurch gekennzeichnet, dass** das Verbindungselement (26) von einem separaten Teil aus Metall oder einer Metallegierung gefertigt ist.

11. Verbindungsanordnung nach einem der vorgehenden Ansprüche, **dadurch gekennzeichnet, dass** ein Rastelement (56) an einem der Bauteile (10) vorgesehen ist, welches in axialer Richtung mit einer Federkraft beaufschlagt ist und in eine Aussparung (62) an dem anderen Bauteil (12) einrastet, wenn die Endstellung erreicht ist.

12. Verbindungsanordnung nach Anspruch 11, **dadurch gekennzeichnet, dass** mehrere Aussparungen (62) vorgesehen sind und das Rastelement (56) in eine der Aussparungen (62) einrastet.

13. Verbindungsanordnung nach Anspruch 11 oder 12, **dadurch gekennzeichnet, dass** das Rastelement von einem Schieber (56) an einem Bauteil gebildet ist, welcher in eine Aussparung (62) an einem Flansch (60) des anderen Bauteils (12) eingreift.
